# EUROPEAN PATENT SPECIFICATION

(11) **EP 2 632 825 B1**
(45) Date of publication and mention of the grant of the patent: **03.12.2014**
(21) Application number: 11782450.8
(22) Date of filing: 25.10.2011
(51) Int. Cl.: B65G 21/08, B65G 21/10

(54) **FRAME OF THE DISCHARGE END OF A CONVEYOR AND METHOD OF PRODUCING THE FRAME**
RAHMEN DES AUSLAUFENDES EINES FÖRDERERS UND VERFAHREN ZUR HERSTELLUNG DES RAHMENS
CHASSIS POUR L'EXTREMITE DE DECHARGEMENT D'UN CONVOYEUR AINSI QUE LE PROCEDE POUR LE MONTAGE DU CHASSIS

(30) Priority: 27.10.2010 FI 20106116
(43) Date of publication of application: 04.09.2013
(73) Proprietor: Andritz Oy, 00180 Helsinki (FI)
(72) Inventor: LAAKSONEN, Iiro, 33710 Tampere (FI)
(74) Representative: Hoffmann Eitle
(86) International application number: PCT/FI2011/050930
(87) International publication number: WO 2012/056103

(56) References cited:
- EP-A2- 1 262 276
- GB-A- 2 009 076
- US-A- 3 623 597
- US-A- 4 765 461

## Description

### Object of the invention

The present invention relates to an apparatus for transferring loose material, especially to a large-sized belt conveyor for transferring wood chips. Belt conveyors are commonly used in chip transfer e.g. at a wood processing yard when storing chips in an open storage in form of a pile. The invention is exquisitely applicable for transporting/transferring wood chips, but it is also applicable for use in connection with other loose materials, such as wood bark, coal, corn or other granular material.

### Prior art and problems related thereto

Conveyors are used in many kinds of applications and due to various transportation needs the sizing of the conveyors and the angle of elevation, i.e. the angle at which the conveyor transfers material in relation to horizontal level, vary case by case. The angle of elevation may also be negative, whereby the transfer takes place to a level lower than the feed level.

In view of the designing of the hopper installed to the discharge end as well as the designing of the working platform, the discharge end should be possible to arrange to be settling at the horizontal level, especially in large conveyor solutions with a belt width of over 650 mm. For this reason, in known solutions the fixing of the discharge end construction to the conveyor's frame construction has required case-specific design due to different angles of elevation of the conveyors. It has not been possible to start the designing of the discharge end construction before the equipment engineering, in which the angles of elevation are determined, which has increased the total design time of the process, and simultaneously the implementation period. Further to that, this kind of case-specific construction is expensive to build.

Currently, the delivery dead lines have been shortened, which often causes haste in the design and construction of a project. This, in turn, increases the costs because the design and production have to be made in a rush.

The present solutions for discharge ends used in large elevating or descending conveyors have not had any standardized construction that would not require separate design according to the angle of elevation. The discharge end has often been mounted at the same angle as the conveyor itself, whereby the design of the discharge end's frame has required less work, but simultaneously the design work for the hopper installed to the discharge end and the working platform surrounding the discharge end has increased.

### The purpose and solution of the invention

A purpose of the invention is to provide a solution for these problems, which is as wide and versatile as possible. The purpose is achieved such that the apparatus and/or the method defined in the preamble of the independent claims are implemented as defined in the characterizing part of the claims. Preferred embodiments of the invention can correspond to the appended dependent claims.

The frame parts standardized in accordance with the invention are arranged in a desired position in relation to each other, which position usually corresponds to the angle of elevation of the conveyor, and joined to each other not until at a latest possible assembling stage prior to surface treatment. This allows minimizing, and even completely avoiding project-specific designing of the discharge end, the hopper and the maintenance platform, when the construction is completely standardized.

A completely novel type of discharge end construction for conveyors has been developed. According to the invention, the discharge end is formed of two parts: an adjusting frame and a basic frame. These parts of the discharge end frame can be produced as standard parts and there is no need to design them anew for each supply. The adjusting frame and the basic frame most preferably have curved surfaces matching to each other for implementing the angle between them.

The developed discharge end construction and production method essentially accelerate the design process and enables to start the machine shop fabrication already when the output and capacity calculations have been performed and thus the width of the belt conveyor that has an impact on the width of the frame parts has been chosen. This can be made already prior to starting the equipment design. Longitudinal frame parts and frame parts applicable for most commonly used conveyor belt widths can be produced with the advantages of recurrent production even earlier than that. In production stage the parts of the discharge end frame are joined to each other in a desired angle of elevation e.g. by means of welding or bolting. If a scale is integrated in the frame construction, the angle between the frame parts can easily be set as desired.

In practice, a precondition for the use of a scale is that the frame parts have a certain pivot point or surface at their both sides. The pivot point does not have to be a mechanical construction, such as a hinge, a stopper or a spin axis for a curved surface, but it can be just a position mark on the parts. The pivot point can preferably be implemented e.g. by making holes in the frame parts, such that by setting into the holes a temporary or permanent bolt, shaft or pipe, the pivot point can be defined for at least the alignment and joining period. Then the surfaces to be joined need not be curved, but e.g. the overlapping surfaces of the frame parts are joined to each other by means of bolts or welding. This kind of pivoting assists the assembling also in other ways. For instance, a temporary shaft put at the place of axis of the end roller shaft is handy to use as a pivot point. Additionally, the pivot point can be implemented in form of holes or corners in the construction and protrusions pointed thereto.

For components that are installed to the basic frame, and for implementing a later change of angle it is preferable that the pivoting surfaces or pivot points between the basic frame and the adjusting frame guide the adjusting frame will rotate in relation to the basic frame such that the reversal point of the set angle between the basic frame and the adjusting frame is located approximately at the same point as the central axis of the end roller. Thereby e.g. the position of the hopper in relation to the end roller or the position of the end roller in relation to the frame of the conveyor does not change substantially as the angle of elevation changes.

Since the angle of elevation normally sets between +25 and -5 degrees due to the functional limitations of a belt conveyor, only a fairly reasonable range of variation in the angle between the adjusting frame and the basic frame is to be expected in the designing and constructions of the frames. If the frame parts were to rotate e.g. more than by a quarter of a circle, they could become too expensive to produce or otherwise unsatisfactory. This limitation could be avoided by dividing the adjustment range for various frame parts suited for limited angle ranges.

Additional advantages of the invention include e.g. the following:
- production of the frame parts can be started at the latest when the width of the conveying belt is known,
- labor costs decrease, because standard parts can produced for storing,
- shorter delivery time,
- cheaper designing costs, since the case-specific design related to the angle of elevation of the conveyor is avoided and
- the angle of elevation can be readjusted, which allows moving the conveyor to a new location where the height difference of the feed end and the discharge end, and thus the angle of elevation is substantially different.

### List of drawings

In the following, the invention is disclosed in more detail with reference to the appended drawings, of which
- Figure 1: illustrates a prior art construction of the discharge end of a belt conveyor,
- Figure 2: illustrates a construction of the discharge end of a belt conveyor according to the present invention,
- Figure 3: illustrates a belt conveyor's discharge end construction according to the invention with the protective cover open and showing the belt pulley with its hub and
- Figure 4: illustrates an example or a solution implemented using mating surfaces that are overlapping in the vertical direction.

### Detailed description of the invention

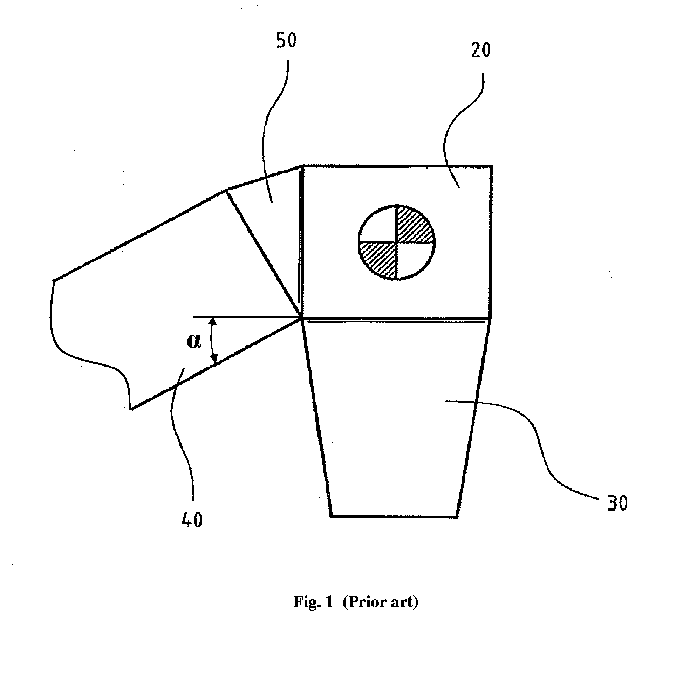

Figure 1 illustrates a prior art construction of the discharge end 20 of a belt conveyor. In this solution the discharge end 20 is mounted horizontally. The upper edge of the discharge hopper 30 located below the discharge end 20 is straight, but a separate adjusting piece 50 has be be arranged in the discharge end between the discharge end 20 and the belt conveyor for ensuring that when the belt conveyor 40 is mounted in a suitable angle of elevation α, the discharge end will nevertheless settle in a horizontal level.

In accordance with prior art, the discharge end 20 could also be mounted so that it is in relation to horizontal level at the same angle as the belt conveyor 40. In that case the upper edge of the discharge hopper 30 has to be designed project-specifically according to the angle of elevation α of the conveyor. Further, the design and implementation of the working platform would become difficult. In practice, the discharge end is always preferably horizontal, whereby also the discharge hopper 30 is always settled in the same position below the discharge end 20.

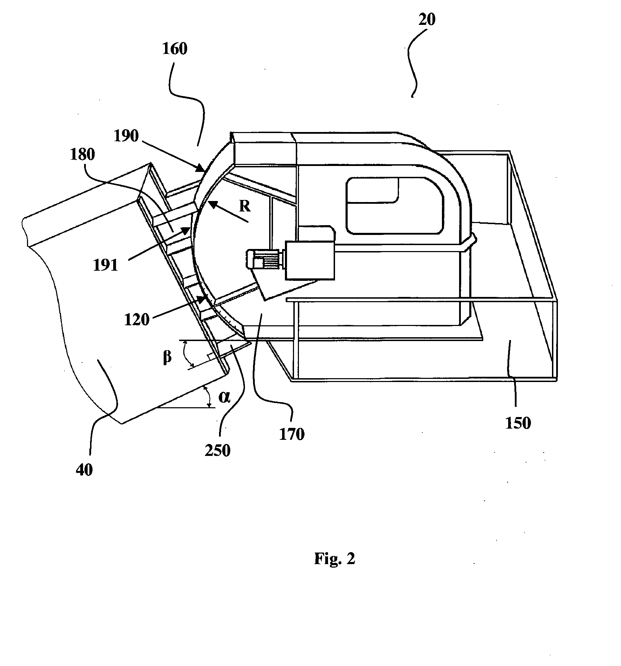

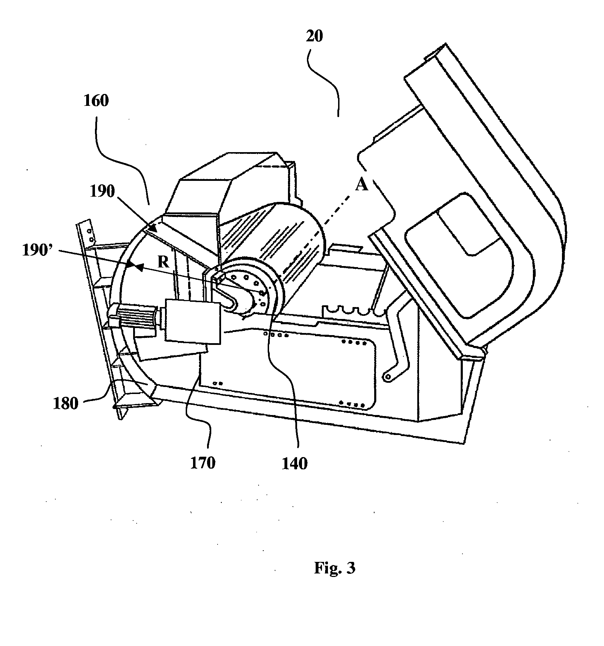

Figures 2 and 3 illustrate a solution according to a highly preferred embodiment of the invention, where the discharge end 20 is positioned horizontally in accordance with the invention. The frame 160 of the discharge end is formed of two parts that are aligned to each other and pivot in relation to each other by means of mating surfaces 190 and 191. The parts are a basic frame 170 and an adjusting frame 180.

Components typically installed to the discharge end 20, such as maintenance platform 150 and hopper 30 are usually installed to the basic frame 170. The end roller 140 is also installed to the basic frame 170, but it can be mounted on bearings to either one frame part, depending on the construction.

From the adjusting frame 180, the frame 160 of the discharge end is installed to the end face of the belt conveyor 40 frame. The purpose of it is mainly to allow changing the set angle β, but devices in conjunction with the belt conveyor can be installed thereto. Also the end of the frame of the conveyor 40 can act as adjusting frame 180, whereby it is not a separate part, but with its joint surfaces, and most preferably being pivoted, can be joined in accordance with a varying angle of elevation α in different set angles β in relation to the basic frame. The adjusting frame 180 can be comprised of two separate, even identical parts located on both sides of the conveyor 40, if they are not joined to each other by means of a transverse intermediate part.

In the solution of Figures 2 and 3, the mating surface 190 of the basic frame 170 and the mating surface 191 of the adjusting frame 180 have the same radius of curvature R, so that they match together and act as pivoting surfaces when the frames are rotated and aligned in relation to each other. The adjusting frame 180 and the basic frame 170 are joined to each other e.g. at these mating surfaces 190 and 191 to a desired set angle β e.g. by means of welding, bolts or other suitable connection. The joining can be done after the angle of elevation α is known and most preferably at the last assembly stage prior to surface treatment.

### Other preferred embodiments of the invention

A scale 120 can be integrated in the basic frame 170 and/or the adjusting frame 180 e.g. in form of cuts, grooves or by painting. By means of the scale the set angle β can easily be set to correspond to the angle of elevation α when joining the frame parts to each other.

Preferably the curved pivoting surfaces 190, 191, a pivoting shaft or pivoting points between the basic frame 170 and the adjusting frame 180 guide the parts to be settled such that the adjusting frame 180 can turn in relation to the basic frame 170 so that the turnaround point of the set angle β between the basic frame and the adjusting frame, i.e. in accordance with figure 3 in this case the turnaround point of the radius of curvature R of the mating surfaces 190 and 191, is located approximately at the same point as the middle shaft A of the end roller.

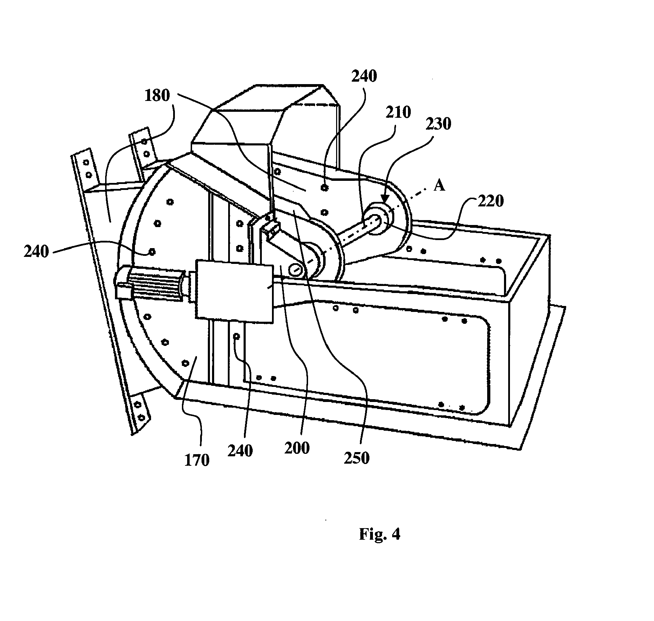

Also, the mating surfaces can be straight and overlapping in accordance with figure 4 and not curved in the end direction as in figures 2 and 3. In that case, the reinforcements 250 of the adjusting frame 180 cannot as easily act as joining surfaces during welding, but they have to be directed to the other side at the mating surfaces. In the overlapping joining it is preferable to use at least in the assembly stage special pivoting points or a pivoting shaft for aligning the frame parts in relation to each other. A well applicable way of pivoting the frame parts is to put a temporary shaft 210 in the bearing housings 200 of the end roller 140, which bearing housings are fasted to the basic frame 170, upon which shaft 210 there is an adjusting sleeve 220, whereto a hole 230 of the adjusting frame 180 or its curved or notched end face is focused and thus defines the rotation of the adjusting frame in relation to the basic frame 170 with the middle shaft A of the end roller as the central point. After boring holes for the bolts 20, the basic frame 170 and the adjusting frame 180 can be bolted together. They can also be joined e.g. by means of welding.

Although the above description relates to embodiments of the invention that in the light of present knowledge are considered the most preferable, it is obvious to a person skilled in the art that the invention can be modified in many different ways within the broadest possible scope defined by the appended claims alone.

## Claims

1. Apparatus for conveying loose material, such a wood chips, bark or corn, said apparatus having a discharge end (10), whereto a belt conveyor (40) transports the material to be transferred, **characterized in that** the frame (160) of the discharge end is formed of two frame parts being mated and joined to each other, the frame parts being a basic frame (170) and an adjusting frame (180), and that these can be set in relation to each other in a desired set angle β prior to joining these frame parts to each other.

2. Apparatus according to claim 1, **characterized in that** the basic frame (170) and the adjusting frame (180) can pivot in relation to each other guided by pivoting surfaces (190, 191), pivoting shafts (210) or pivoting points before they are joined to each other.

3. Apparatus according to claim 1 or 2, **characterized in that** the adjusting frame (180) is joined to the basic frame (170) so that the set angle β between them is substantially the same as the angle of elevation α of the conveyor.

4. An apparatus according to any one of the preceding claims, **characterized in that** the basic frame (170) and the adjusting frame (180) have curved mating surfaces (190, 191) matching to each other.

5. Apparatus according to any one of the preceding claims, **characterized in** the a scale (120) is integrated in the adjusting frame (180) and/or the basic frame (170), by means of which scale the set angle β between the adjusting frame (180) and the basic frame (170) can easily be set to the desired value in the joining stage.

6. Apparatus according to any one of the preceding claims, **characterized in that** the pivoting surfaces (190, 191), pivoting shafts (210) or pivoting points between the basic frame (170) and the adjusting frame (180) guide these frame parts to settle such that the adjusting frame (180) can pivot in relation to the basic frame (170) so that the turnaround point of the angle β between the basic frame (170) and the adjusting frame (180) is located substantially at the same point as the middle shaft A of an end roller (140).

7. Method of producing an apparatus for conveying loose material, such as wood chips, bark or corn, said apparatus having a discharge end (10), whereto a belt conveyor (40) transports the material to be transferred, **characterized in that** the frame (160) of the discharge end is formed of two frame parts which are a basic frame (170) and an adjusting frame (180) that can be matched and joined to each other, and that these are set in relation to each other in a set angle β corresponding to the angle of elevation α of the conveyor prior to joining these frame parts together.

8. A method according to claim 7, **characterized in that** the basic frame (170) and the adjusting frame (180) are joined to each other at the final stage of production of the discharge end, after the angle of elevation is defined, preferably at the last assembly stage prior to surface treatment.

9. Method according to claim 7 or 8, **characterized in that** the basic frame (170) and the adjusting frame (180) can rotate in relation to each other guided by pivoting surfaces (190, 190), pivoting shafts (210) or pivoting points before they are joined to each other.

10. A method according to any one of claims 7-9, **characterized in that** when joining the basic frame (170) and the adjusting frame (180) to each other, the angle between them is adjusted by means of a scale (120) integrated in the basic frame (170) or the adjusting frame (180).

## Patentansprüche

1. Vorrichtung zum Fördern von Schüttgut, wie zum Beispiel Holzschnitzel, Rinde oder Getreide, wobei die Vorrichtung ein Auswurfende (10) aufweist, zu dem ein Förderband (40) das zu transferierende Material transportiert,
**dadurch gekennzeichnet, dass** der Rahmen (160) des Auswurfendes aus zwei Rahmenteilen ausgebildet ist, die miteinander zusammengefügt und verbunden sind, wobei die Rahmenteile ein Grundrahmen (170) und ein Einstellrahmen (180) sind und dadurch, dass diese in Beziehung zueinander in einen gewünschten Sollwinkel β vor dem Verbinden dieser Rahmenteile miteinander, eingestellt werden können.

2. Vorrichtung nach Anspruch 1, **dadurch gekennzeichnet, dass**
der Grundrahmen (170) und der Einstellrahmen (180) in Beziehung zueinander, geführt durch Schwenkflächen (190, 191), Schwenkachsen (210) oder Schwenkpunkte, schwenken können, bevor sie miteinander verbunden werden.

3. Vorrichtung nach Anspruch 1 oder 2, **dadurch gekennzeichnet, dass**
der Einstellrahmen (180) so mit dem Grundrahmen (170) verbunden ist, dass der Sollwinkel β zwischen ihnen im Wesentlichen der gleiche ist, wie der Steigungswinkel α des Förderbands.

4. Vorrichtung nach einem der vorhergehenden Ansprüche, **dadurch gekennzeichnet, dass**
der Grundrahmen (170) und der Einstellrahmen (180) gekrümmte Passflächen (190, 19.1) aufweisen, die zueinander passen.

5. Vorrichtung nach einem der vorhergehenden Ansprüche, **dadurch gekennzeichnet, dass**
eine Skala (120) in dem Einstellrahmen (180) und/oder dem Grundrahmen (170) integriert ist, mit welcher der Sollwinkel β zwischen dem Einstellrahmen (180) und dem Grundrahmen (170) in dem Verbindungsschritt leicht auf den gewünschten Wert eingestellt werden kann.

6. Vorrichtung nach einem der vorhergehenden Ansprüche, **dadurch gekennzeichnet, dass**
die Schwenkflächen (190, 191), Schwenkachsen (210) oder die Schwenkpunkte zwischen dem Grundrahmen (170) und dem Einstellrahmen (180) diese Rahmenteile so zum Anordnen führen, dass der Einstellrahmen (180) in Bezug auf den Grundrahmen (170) so schwenken kann, dass der Wendepunkt des Winkels β zwischen dem Grundrahmen (170) und dem Einstellrahmen (180) im Wesentlichen an demselben Punkt wie die Mittelachse A einer Endrolle (140) angeordnet ist.

7. Verfahren zur Herstellung einer Vorrichtung zum Fördern von Schüttgut, wie zum Beispiel Holzschnitzel, Rinde oder Getreide, wobei die Vorrichtung ein Auswurfende (10) aufweist, zu dem ein Förderband (40) das zu transferierende Material transportiert,
**dadurch gekennzeichnet, dass** der Rahmen (160) des Auswurfendes aus zwei Rahmenteilen ausgebildet ist, welche ein Grundrahmen (170) und ein Einstellrahmen (180) sind, die miteinander zusammengefügt und verbunden werden können und dadurch, dass diese in Beziehung zueinander in einen Sollwinkel β, der einem Steigungswinkel α des Förderbands entspricht, vor dem Verbinden dieser Rahmenteile, eingestellt werden.

8. Verfahren nach Anspruch 7, **dadurch gekennzeichnet, dass**
der Grundrahmen (170) und der Einstellrahmen (180) miteinander in dem Endschritt der Herstellung des Auswurfendes, nachdem der Steigungswinkel definiert wurde, vorzugsweise als letzter Montageschritt vor einer Oberflächenbehandlung, miteinander verbunden werden.

9. Verfahren nach Anspruch 7 oder 8, **dadurch gekennzeichnet, dass**
der Grundrahmen (170) und der Einstellrahmen (180) in Beziehung zueinander, geführt durch Schwenkflächen (190, 190), Schwenkachsen (210) oder Schwenkpunkte, drehen können, bevor sie miteinander verbunden werden.

10. Verfahren nach einem der Ansprüche 7-9, **dadurch gekennzeichnet, dass**
beim Verbinden des Grundrahmens (170) und des Einstellrahmens (180) miteinander, der Winkel zwischen ihnen mit einer Skala (120), die in dem Grundrahmen (170) oder dem Einstellrahmen (180) integriert ist, eingestellt wird.

## Revendications

1. Dispositif permettant de transporter un matériau sans cohésion, tel que des copeaux de bois, de l'écorce ou des grains de céréales, ledit appareil comportant une extrémité de déchargement (10), sur lequel un convoyeur à bande (40) transporte le matériau à transférer, **caractérisé en ce que** le châssis (160) de l'extrémité de déchargement est constitué de deux parties de châssis accouplées et reliées l'une à l'autre, les parties de châssis étant un châssis de base (170) et un châssis d'ajustement (180), et **en ce que** ceux-ci peuvent être mis en liaison l'un avec l'autre suivant un angle de montage β souhaité avant le raccordement de ces deux parties l'une avec l'autre.

2. Dispositif selon la revendication 1, **caractérisé en ce que** le châssis de base (170) et le châssis d'ajustement (180) peuvent pivoter l'un par rapport à l'autre guidés par des surfaces de pivotement (190, 191), des axes de pivotement (210) ou des point de pivotement avant qu'ils ne soient raccordés l'un à l'autre.

3. Dispositif selon la revendication 1 ou 2, **caractérisé en ce que** le châssis d'ajustement (180) est raccordé au châssis de base (170) de sorte que l'angle β de montage entre eux soit essentiellement le même que l'angle d'élévation α du convoyeur.

4. Dispositif selon l'une quelconque des revendications précédentes, **caractérisé en ce que** le châssis de base (170) et le châssis d'ajustement (180) présentent des surfaces d'accouplement courbes (190, 191) coïncidant l'une avec l'autre.

5. Dispositif selon l'une quelconque des revendications précédentes, **caractérisé en ce qu'**une graduation (120) est intégrée dans le châssis d'ajustement (180) et/ou le châssis de base (170) par l'intermédiaire de laquelle l'angle β de montage entre le châssis d'ajustement (180) et le châssis de base (170) peut facilement être établi à la valeur souhaitée dans l'étape de raccordement.

6. Dispositif selon l'une quelconque des revendications précédentes, **caractérisé en ce que** les surfaces de pivotement (190, 191), les axes de pivotement (210) ou les points de pivotement entre le châssis de base (170) et le châssis d'ajustement (180) guident ces parties de châssis à se disposer de telle façon que le châssis d'ajustement (180) peut pivoter par rapport au châssis de base (170) de sorte que le point de rotation de l'angle β entre le châssis de base (170) et le châssis d'ajustement (180) est placé essentiellement au même point que l'axe central A d'un rouleau d'extrémité (140).

7. Procédé de fabrication d'un dispositif permettant de convoyer un matériau sans cohésion, tel que des copeaux de bois, de l'écorce ou des grains de céréales, ledit dispositif comportant une extrémité de déchargement (10), sur lequel un convoyeur à bande (40) transporte le matériau à transférer, **caractérisé en ce que** le châssis (160) de l'extrémité de déchargement est constitué de deux parties de châssis, lesquelles sont un châssis de base (170) et un châssis d'ajustement (180), qui peuvent être accouplés et raccordés l'un à l'autre, et **en ce que** ceux-ci sont mis en relation l'un avec l'autre suivant un angle β de montage correspondant à l'angle d'élévation α du convoyeur avant de raccorder ensemble ces parties de châssis.

8. Procédé selon la revendication 7, **caractérisé en ce que** le châssis de base (170) et le châssis d'ajustement (180) sont raccordés l'un avec l'autre à la phase finale de production de l'extrémité de déchargement, après que l'angle d'élévation a été défini, de préférence, à la dernière phase d'assemblage avant un traitement de surface.

9. Procédé selon la revendication 7 ou 8, **caractérisé en ce que** le châssis de base (170) et le châssis d'ajustement (180) peuvent tourner l'un par rapport à l'autre guidés par des surfaces de pivotement (190, 191), des axes de pivotement (210) ou des points de pivotement avant qu'ils soient raccordés l'un à l'autre.

10. Procédé selon l'une quelconque des revendications 7 à 9, **caractérisé en ce que**, lors du raccordement du châssis de base (170) et du châssis d'ajustement (180) l'un avec l'autre, l'angle formé entre eux est ajusté au moyen d'une graduation (120) intégrée dans le châssis de base (170) ou dans le châssis d'ajustement (180).
